# EUROPEAN PATENT APPLICATION

(11) **EP 3 489 097 A1**
(43) Date of publication of application: **29.05.2019**
(21) Application number: 17203020.7
(22) Date of filing: 22.11.2017
(51) Int. Cl.: B60R 22/46, B60R 22/34

(54) **CLUTCH FOR A SEAT BELT TENSIONER**

(71) Applicant: TRW Automotive GmbH, 73553 Alfdorf (DE)
(72) Inventor: Singh, Yashwanth, 73525 Schwäbisch Gmünd (DE)
(74) Representative: ZF TRW Patentabteilung

(57) **Abstract**

A clutch (10) for a seat-belt tensioner in a vehicle has a driving gear (16) adapted for being rotated in a driving direction (D) and in a releasing direction (R), a first pawl (26) arranged at a face side (24) of a seat belt spool (14), the first pawl (26) having a tooth (30) adapted to engage with a clutch-side toothing (22) on the driving gear (16) by pivoting the first pawl (26) around a pivot axis (28) on the seat belt spool (14). A second pawl (40) is arranged at a face side (42) of the driving gear (16), the second pawl (40) being adapted to interact with a control disk (32) mounted on the seat belt spool (14), the control disk (32) being rotatable with respect to the seat belt spool (14). The control disk (32) interacts with the first pawl (26) by way of guiding geometries (34, 36) on the first pawl (26) and the control disk (32), the guiding geometries (34, 36) including an axially extending guiding pin (82) that is arranged in a groove (76), the groove (76) having a parking section (80) extending in circumferential direction (U), the guiding pin (82) lying in the parking section (80) when the first pawl (26) is in the disengaged position so that the first pawl (26) is hindered from pivoting away from its disengaged position.

## Description

The invention relates to a clutch for a seatbelt tensioner of a seatbelt system in a vehicle.

Reversible seatbelt tensioners are used to increase the safety of the vehicle occupants and their driving comfort. A reversible drive, usually an electric motor, is coupled with a seatbelt spool axis to rotate the seatbelt spool of a seatbelt retractor and to take in loose seatbelt webbing, for instance in situations in which a control unit decides that this could be potentially beneficial. In this case, a clutch is closed that couples the reversible drive with the seatbelt spool, and the seatbelt spool is rotated by the reversible drive to draw in seatbelt webbing. In the regular operating mode of the seatbelt system the clutch is open so that the seatbelt spool of the seatbelt retractor can draw in and give out seatbelt webbing without being hindered by the reversible drive. An example for a clutch for a seatbelt tensioner is shown in DE 10 2011 119 343 A1.

Additionally to the reversible drive, the seatbelt tensioner usually is provided with a single-use pyrotechnic drive that will only be activated in case of an actual crash situation. The seatbelt spool is rotated by the pyrotechnic drive with a far higher rotational velocity than by the reversible drive. So as not to interfere with the pyrotechnic drive and also to prevent an interference with a subsequent load limiting function of the seatbelt system that reduces the force acting on the occupant after the pyrotechnic drive has finished its operation, the clutch usually is open and the reversible drive disengaged from the seatbelt spool when the pyrotechnic drive is activated.

The reversible drive usually is able to rotate a driving gear in a driving direction and in a reversed releasing direction. The driving gear can be reversibly coupled to the seat belt spool. The seat belt spool usually is coupled to the pyrotechnic drive in a way that the seat belt spool is set into rotation as soon as the pyrotechnic drive is activated.

Commonly, the seatbelt spool, the clutch and also the reversible drive and the pyrotechnic drive are mounted on a frame of the seatbelt retractor.

The normal operation of the clutch, i.e. the motion of certain clutch components during closing and opening of the clutch so that the reversible drive may pretension the seat belt when required occurs during the regular operation of the vehicle.

It is an object of the present invention to provide a clutch that reliably stays in the open state as long as the reversible drive is not in operation.

This is achieved with a clutch for a seat belt tensioner in a vehicle, comprising a driving gear adapted for being rotated in a driving direction and in a releasing direction. A first pawl is arranged at a face side of a seat belt spool, the first pawl having a tooth adapted to engage with a clutch-side toothing on the driving gear to couple the seat belt spool with the driving gear. The first pawl is held pivotally around a pivot axis on the seat belt spool and is adapted to assume a disengaged position in which the first pawl is not in engagement with the clutch-side toothing of the driving gear and an engaged position in which the first pawl is in engagement with the clutch-side toothing. Further, the clutch comprises a second pawl arranged at a face side of the driving gear, the second pawl being adapted to interact with a control disk mounted on the seat belt spool, the control disk being rotatable about a predetermined rotation angle with respect to the seat belt spool. The guiding geometries include an axially extending guiding pin that is arranged in a groove, the groove having a parking section extending in circumferential direction, the guiding pin lying in the parking section when the first pawl is in the disengaged position so that the first pawl is hindered from pivoting away from its disengaged position.

Any force acting on the seat belt spool towards the first pawl or on the first pawl itself tending to swivel the first pawl radially outwards may be translated by the guiding geometries into a radial force acting between the pin and the groove. As the groove in the parking section extends in circumferential direction, essentially no force component is generated acting in circumferential direction. A purely radially acting force, however, cannot move the pin in the groove so that any pivoting of the first pawl is impeded. The radial force can be taken up by the control disk, and the first pawl is kept stationary with regard to the seat belt spool. As the first pawl cannot swivel in any direction, the clutch stays reliably in its open state.

Preferably, the pin is arranged on the control disk while the groove is manufactured on the first pawl.

Usually, the seat belt spool, the driving element and the control disk have a common axis of rotation. All directions mentioned in this application refer to this common axis of rotation.

The pivot axis of the first pawl, however, should be arranged spaced apart from this axis of rotation.

Preferably, the parking section of the groove extends purely along the circumferential direction. The width of the groove in radial direction may correspond essentially to a cross-section of the guiding pin. Any centrifugal force acting on the pin, therefore, is translated into a, preferably exclusively, radial force acting on the guiding pin and, as a result, on the control disk. For this reason, the control disk will not be rotated with regard to the first pawl and the seat belt spool. As the control disk is kept stationary, the first pawl is unable to leave its disengaged position and is hindered from pivoting.

Forces acting on the seat belt spool may be for instance forces generated by a sudden rotation of the seat belt spool due to extraction of seat belt webbing, vehicle vibrations, abrupt accelerations or decelerations of the vehicle, also due to impact situations, or by an activation of the pyrotechnic drive of the seat belt tensioner.

The control disk may be mounted on the seat belt spool in a bearing that is deformable, preferably elastically deformable, in radial direction when a predetermined force threshold is surpassed, so that a predetermined frictional force acting on the control disk is increased and the control disk is kept stationary with regard to the seat belt spool. The force threshold preferably is chosen slightly above the force necessary for pivoting the first pawl between its disengaged and its engaged position, e.g. 10 - 30% higher. However, the force threshold should be set so high that no deformation of the bearing occurs during the regular engagement and disengagement of the first pawl.

When a centrifugal force acts on the first pawl as described above, generating a radial force above the force threshold, the bearing of the control disk is deformed and the control disk is clamped on the seat belt spool axis. The friction between the control disk and the seat belt spool is increased and the control disk is hindered from rotation relative to the seat belt spool and kept stationary with regard to the seat belt spool.

As a result, the first pawl is kept stationary, too and cannot pivot, as pivoting of the first pawl always includes a relative motion of the guiding geometries, corresponding to a relative motion of the control disk and the seat belt spool.

To generate a determined centrifugal force acting on the first pawl, it is possible to choose a shape of the first pawl so that the center of gravity of the first pawl is arranged outside of the axis of rotation of the seat belt spool. A higher centrifugal force acting on the pawl in radially outwardly direction may increase the deformation of the bearing of the control disk and therefore increase the friction between the control disk and the seat belt spool in a controlled way, making it easier to block a rotational movement of the control disk with regard to the seat belt spool.

Alternatively, it is possible to choose a shape of the first pawl so that the center of gravity of the first pawl is arranged exactly at the axis of rotation of the seat belt spool. Then, essentially no centrifugal force will be generated when the seat belt spool rotates and no centrifugal force will act on the first pawl at all.

To provide a restoring force, the control disk is preferably connected to the seat belt spool by a first tension spring that generates an increasing pretention with increasing relative rotation of the control disk with respect to the seat belt spool.

In the disengaged position of the first pawl, the first tension spring may also help to keep the control disk from rotating relative to the seat belt spool and, therefore, to keep the first pawl stationary in its disengaged position.

Preferably, the clutch-side toothing is arranged at a radial inner face of a central opening in the driving gear, and, therefore, radially outwards from the first pawl.

Correspondingly, the first pawl may be pivoted radially outwards from the disengaged position into the engaged position where the tooth of the pawl engages the clutch-side toothing of the driving gear.

Of course, one might also envision an arrangement where the clutch-side toothing lies radially inwards of the first pawl and the first pawl is pivoted radially inwards into its engaged position.

Preferably, the control disk is provided with a control disk toothing and the second pawl is provided with a tooth and the second pawl is arranged pivotally on the driving gear so that the tooth is able to engage the control disk toothing.

The face side of the driving gear on which the second tooth is arranged advantageously faces away from the seat belt spool and lies opposite to a clutch housing.

A possible way to operate the clutch and to move the first pawl from its disengaged position into its engaged position and back is described in the following.

In a situation where the seat belt webbing is to be pretensioned, the reversible drive starts to rotate the driving gear in driving direction to close the clutch.

The second pawl is moved into engagement with the control disk toothing by a pawl engagement mechanism realized between the driving gear and a non-rotating stationary housing part.

The pawl engagement mechanism may include among other components a circumferential runway in the stationary housing part and a friction element movable in the circumferential runway and coupled with the second pawl. For instance, a coupling pin on the friction element extends into a runway groove manufactured on a face of the second pawl. The second pawl is suspended on the face of the driving gear in such a way that it can alter its spatial orientation in a plane parallel to the driving gear face, in dependency e.g. of the coupling pin and a second tension spring connecting the second pawl to the driving gear.

When the second pawl has engaged the control disk, the control disk is pulled along with the driving gear by the interaction with the second pawl, and, thereby, starts to rotate relative to the seat belt spool.

The rotation of the control disk then causes the interacting guiding geometries on the control disk and the first pawl mounted to the seat belt spool to move relative to each other, leading to the first pawl being pivoted radially outwards until the first pawl engages the clutch-side toothing of the driving gear.

From the moment the first pawl has engaged the clutch-side toothing of the driving gear, the seat belt spool is rotated by the driving gear and the seat belt webbing is tensioned.

After the first pawl has engaged the driving gear, the second pawl is decoupled from the control disk by a pawl release mechanism and, preferably, moved into a decoupled position from where the second pawl is not able to reengage with the control disk until brought back into its disengaged position.

The decoupling of the second pawl preferably occurs while the driving gear is still rotating the seat belt spool and the first pawl is still engaged with the clutch-side toothing on the driving gear.

To open the clutch and to disengage the first pawl from the driving gear and pivot the first pawl back from its engaged position into its disengaged position, the driving gear is rotated in releasing direction by the reversible drive.

Then, the clutch-side toothing of the driving gear moves away from the tooth of the first pawl and the first pawl loses contact with the clutch-side toothing. The seat belt spool is no longer pulled along by the driving gear.

The first tension spring acting between the control disk and the seat belt spool then pulls the control disk back into its initial position, thereby rotating the control disk with regard to the seat belt spool. The interacting guiding geometries on the control disk and the first pawl also move relative to each other during this motion, and the first pawl is pivoted back radially inwards from its engaged position into its disengaged position.

While the driving gear rotates in releasing direction, the pawl release mechanism moves the second pawl back into its disengaged position. The pawl release mechanism includes e.g. also the runway groove on the second pawl and the friction element in the circular runway on the housing part, as well as the second tension spring.

The clutch may be closed anew by rotating the driving gear again in driving direction.

Should, however, the pyrotechnic drive be activated, the seat belt spool is rotated exclusively by the pyrotechnic drive.

When the pyrotechnic drive is activated in a situation where the first pawl is in its disengaged position, as described above, the first pawl will stay in the disengaged position and is kept from pivoting into its engaged position.

When, however, the pyrotechnic drive is activated when the first pawl is in its engaged position and the clutch is closed, the seat belt spool is rotated faster in driving direction by the pyrotechnic drive then by the reversible drive. As a result, the first pawl loses contact with the clutch-side toothing of the driving gear as the seat belt spool and with it the first pawl moves away from the clutch-side toothing of the driving gear. Then, the first tension spring pulls the control disk and the first pawl back into the disengaged position.

All features of the invention described in this application may be realized independently of each other and in any combination deemed suitable by a person skilled in the art.

In the following, the invention will be described in detail on the basis of a preferred embodiment and with regard to the enclosed drawings. In the drawings,
- Figure 1 shows an exploded view of a clutch according to the invention;
- Figure 2 shows several components of the clutch of Figure 1 in a schematic perspective view;
- Figure 3 shows an exploded view of several components of the clutch of Figure 1;
- Figure 4 shows a schematic view of different positions of components of a pawl engagement/disengagement mechanism of the clutch of Figure 1;

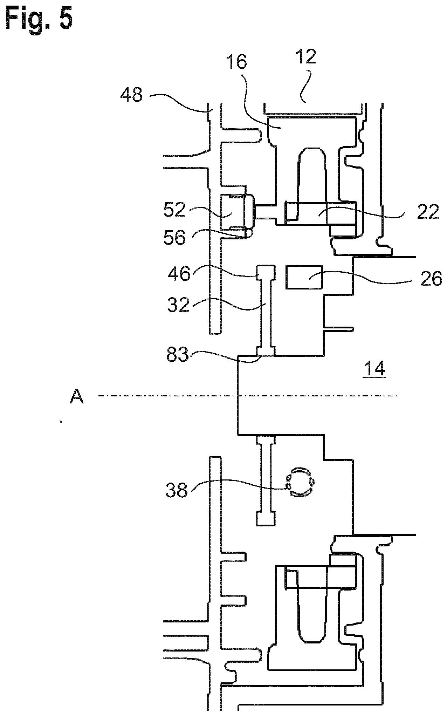

- Figure 5 shows a schematic sectional view of the clutch of Figure 1;
- Figure 6 to 8 show different views of the pawl engagement/disengagement mechanism of the clutch of Figure 1;
- Figures 9 and 10 show a plan view of the clutch according to the invention in an open state of the clutch with the first pawl in its disengaged position;
- Figure 11 shows a detailed view of the second pawl of the clutch according to the invention;
- Figure 12 shows a plan view of the clutch according to the invention during the closing of the clutch where the second pawl has engaged the control disk and the first pawl has not yet left its disengaged position;
- Figures 13 and 14 show the clutch during the closing of the clutch when the first pawl starts to pivot radially outwards;
- Figures 15 and 16 show the clutch during the closing of the clutch at the moment where the first pawl has completely pivoted radially outwards;
- Figures 17 and 18 show the clutch during the closing of the clutch shortly before the first pawl engages the clutch-side toothing of the driving gear;
- Figure 19 shows a schematic view of the first pawl in its disengaged and its engaged position;
- Figures 20 to 23 show the clutch during the last step of closing, where the first pawl reaches its engaged position and the second pawl has already lost contact with the control disk toothing;
- Figure 24 shows the clutch in its closed state shortly before the pyrotechnic drive starts to operate;

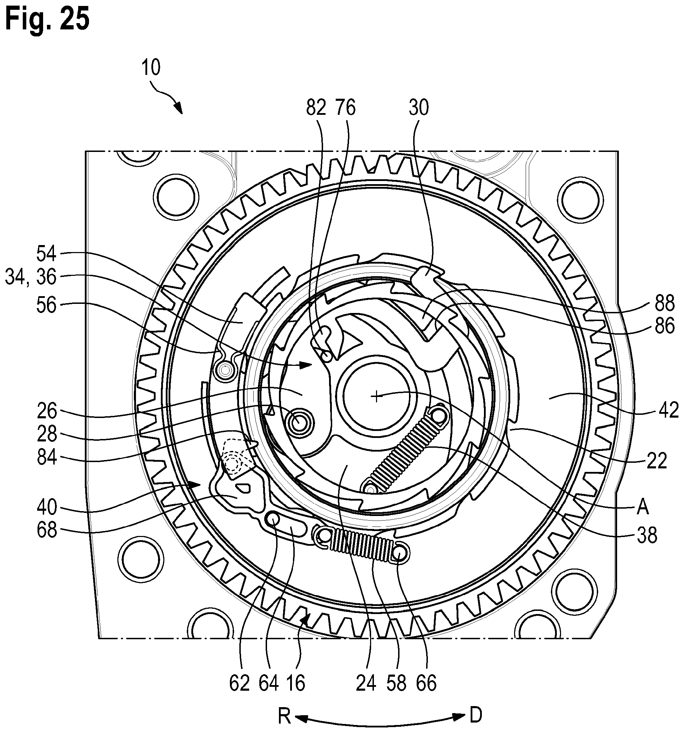

- Figure 25 shows a plan view of the clutch during opening of the clutch when the driving gear starts to turn into the releasing direction;
- Figures 26 to 29 show the clutch during opening of the clutch when the first pawl moves back into its disengaged position and the second pawl starts moving back from the decoupled position into its disengaged position; and
- Figures 30 and 31 show the clutch shortly before the second pawl reaches its disengaged position again.

The Figures show a clutch 10 for a seat-belt tensioner of a safety belt system, in particular in a vehicle.

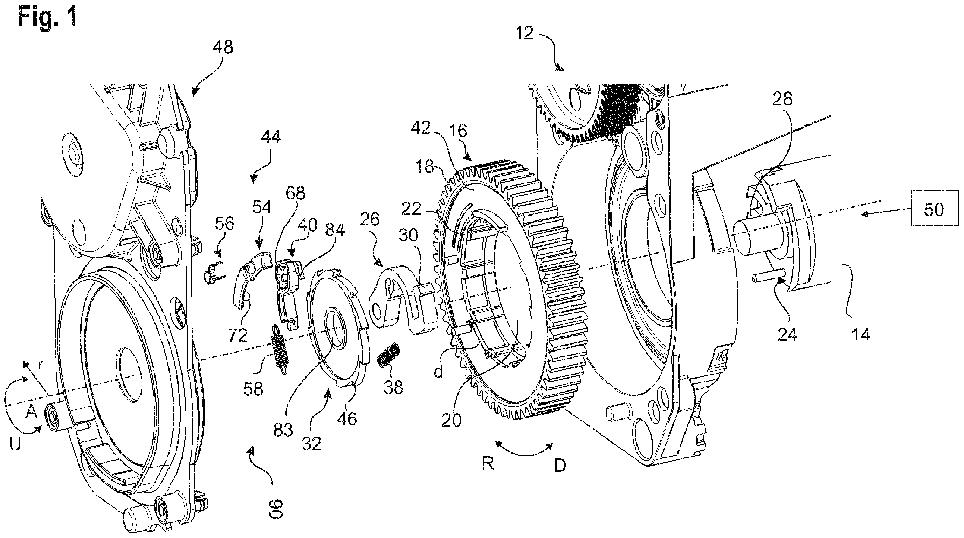

The clutch 10 effects in its closed state a force transmission from a reversible drive 12 (only schematically in Figure 1) and a seat belt spool 14 on which a seat-belt webbing of the safety belt system is rolled up (not shown in detail).

The reversible drive 12 is connected to a driving gear 16 by means of an outer toothing 18 and can rotate the driving gear 16 in both a driving direction D, corresponding to retracting seat belt webbing, and a reversed releasing direction R.

The driving gear 16 has a central opening 20. At the inner circumference of the central opening 20 a clutch-side toothing 22 is provided. The clutch-side toothing 22 has several separate teeth that are arranged spaced apart by a distance d. In this example, the clutch-side toothing consists of ten teeth.

The driving gear 16 is mounted concentrically with a seat belt spool axis A that also forms a common axis of rotation A for the seat belt spool 14 and the driving gear 16. All indication of directions are in relation to this common axis of rotation A.

On a face 24 of the seat belt spool 14 a first pawl 26 is pivotally mounted so that it can pivot around a pivot axis 28 radially outwards and back radially inwards.

The face side 24 of the seat belt spool 14 is considered to be part of the clutch 10 in this application.

The first pawl 26 has a single tooth 30, arranged at its outer end. Of course, it would be possible to provide the first pawl 26 with more than one tooth and/or arrange the tooth at another position of the first pawl 26.

The first pawl 26 can engage the clutch-side toothing 22 of the driving gear 16 with its tooth 30.

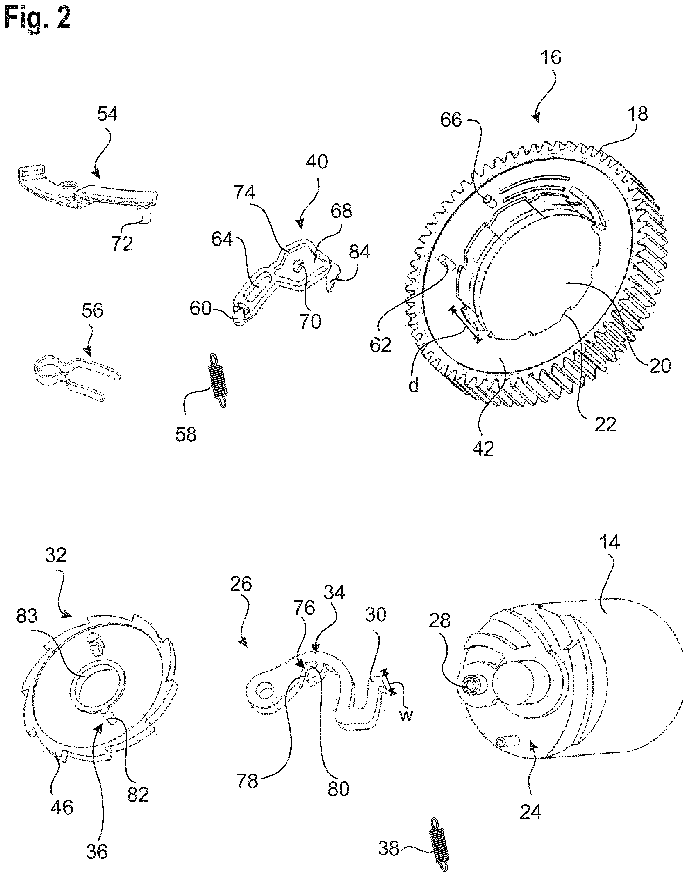

To pivot the first pawl 26 radially outwards, the first pawl 26 is connected to a control disk 32 by way of interacting guiding geometries 34, 36 (see e.g. Figure 2).

The control disk 32 is also centered on the common rotation axis A and is connected to the face 24 of the seat belt spool 14 by means of a first tension spring 38. The first tension spring 38 is in this example a helical spring, of course any suitable kind of spring could be used.

Therefore, the control disk 32 can only rotate with regard to the seat belt spool 14 for a predetermined angle. When no force is exerted on the control disk 32 by other components, the first tension spring 38 pulls the control disk 32 back into its initial position.

To rotate the control disk 32 with regard to the seat belt spool 14, a second pawl 40 is provided that is mounted on a face 42 of the driving gear 16 facing away from the seat belt spool 14.

The second pawl 40 interacts with a pawl engagement mechanism 44 in which several components of the clutch operate together to pivot the second pawl 40 into engagement with a control disk toothing 46 arranged at a radial outer circumference of the control disk 32.

In this example, the control disk toothing 46 has the same number of teeth as the clutch-side toothing on the driving gear 16.

The clutch 10 is mounted in a clutch housing that may be part of a retractor housing in which also the seat belt spool 14, the rest of the seat belt retractor, the reversible drive 12 and a pyrotechnic drive 50 are arranged (only schematically shown in Figure 1).

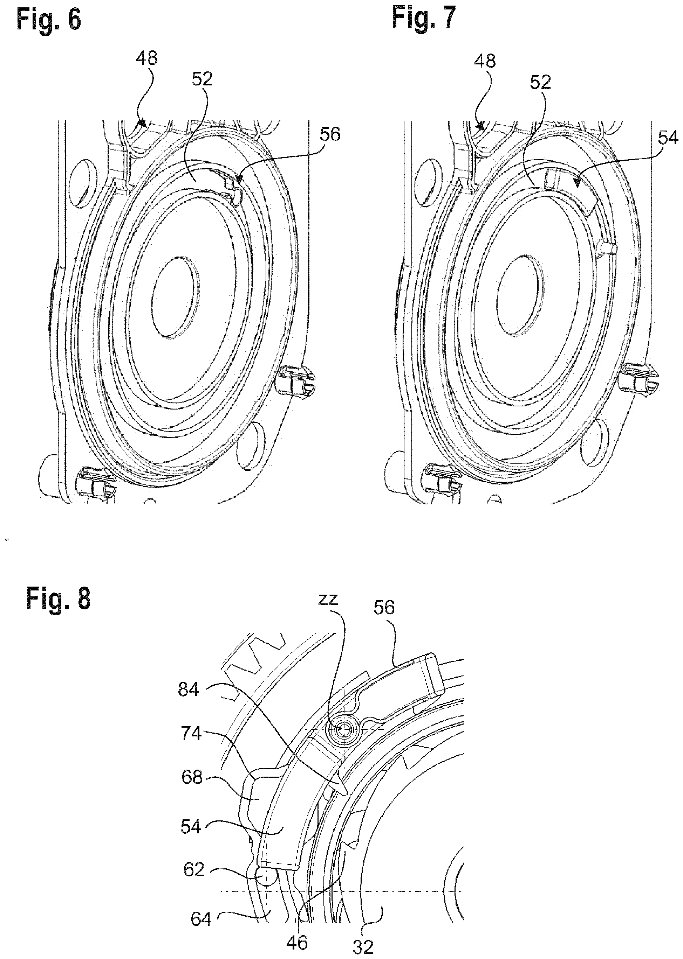

In a face of a housing part 48 on a face lying opposite the face 42 of the driving gear 16, a circumferential groove 52 is provided (see Figures 6 and 7). In the circumferential groove 52, a friction element 54 and a flat spring 56 connected to the friction element 54 are arranged. The friction element 54 and the flat spring 56 can be pushed all around the circumferential groove 52 both in driving direction D and in releasing direction R against a predetermined frictional force that is adjustable by choosing a corresponding flat spring 56.

The second pawl 40 is connected to the face 42 of the driving gear 16 by way of a second tension spring 58 that connects a first end 60 of the second pawl 40 to an axially protruding pin 62 arranged on the face 42 of the driving gear 16. The second tension spring 58 acts in direction of a disengaged position of the second pawl 40.

Additionally, the second pawl 40 has an elongated opening 64, through which a second pin 66 extends that protrudes axially from the face 42 of the driving gear 16.

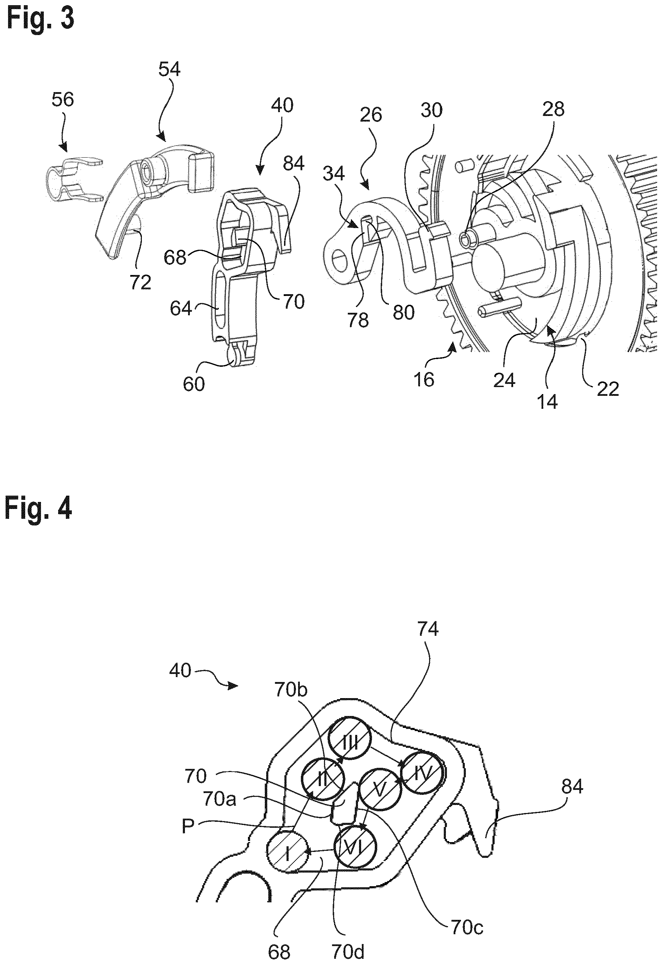

Further, the second pawl 40 comprises a runway groove 68 that is formed in a face of the second pawl 40 parallel to the plane of the face 42 of the driving gear 16 and facing the circumferential groove 52 in the housing part 48. The runway groove 68 is circumferentially closed and extends around a central protrusion 70. In this example, the central protrusion 70 is delimited by four axially extending side faces 70a to 70d (see Figure 4) so that it forms a four-way cam.

A coupling pin 72 extending in axial direction A from the friction element 54 extends into the runway groove 68 and comes into contact with the side faces 70a to 70d as well as with a circumferentially closed radial outer wall 74 of the runway groove 68 during the engagement and disengagement motion of the second pawl 40. The radial outer wall 74 forms a radial outer contour, while the four faces 70a to 70d of the central protrusion 70 form a radial inner contour that both limit the motion of the coupling pin 72 inside of the runway groove 68 and that determine a circumferentially closed traveling path P. However, the runway groove 68 in this example is at most points along its circumference wider then a diameter of the coupling pin 72.

The second pawl 40 has no singular fixed pivot axis, but can change its spatial orientation in a plane parallel to the face 42 of the driving gear 16 to a certain degree. Therefore, the second pawl 40 can perform complex motions based on its chosen geometry, in particular shape and position of the elongated opening 64, shape and position of the runway groove 68 and the position of the coupling pin 72.

Coming now back to the description of the first pawl 26, the guiding geometry 34 on the first pawl 26 in this example has the shape of a groove 76 that is approximately L-shaped and has a guiding section 78 extending slightly oblique to the radial direction r and a parking section 80, extending exclusively in circumferential direction U. The guiding section 78 continues into the parking section 80. The end of the parking section 80 that is not connected to the guiding section 78 is closed. The end of the guiding section 78 is open at its radially inner end.

The guiding geometry 36 on the control disk 32 consists in this example of a guiding pin 82 extending in axial direction from the face of the control disk 32. This is shown for instance in Figure 2.

The free end of the guiding pin 82 is always arranged in the groove 76, either in the guiding section 78 or in the parking section 80.

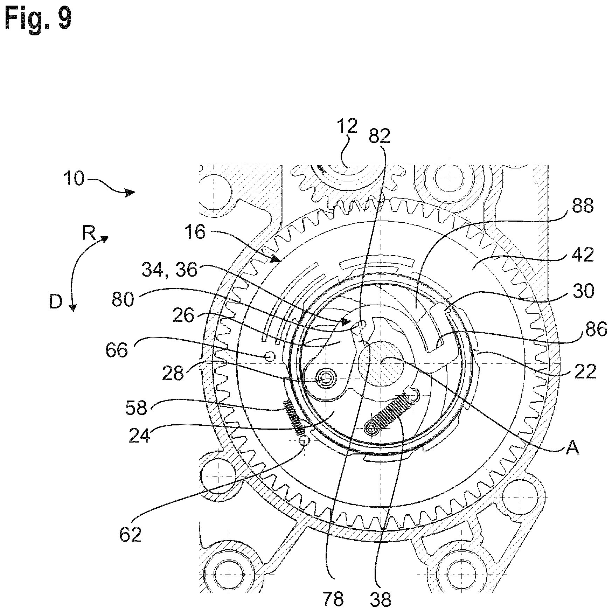

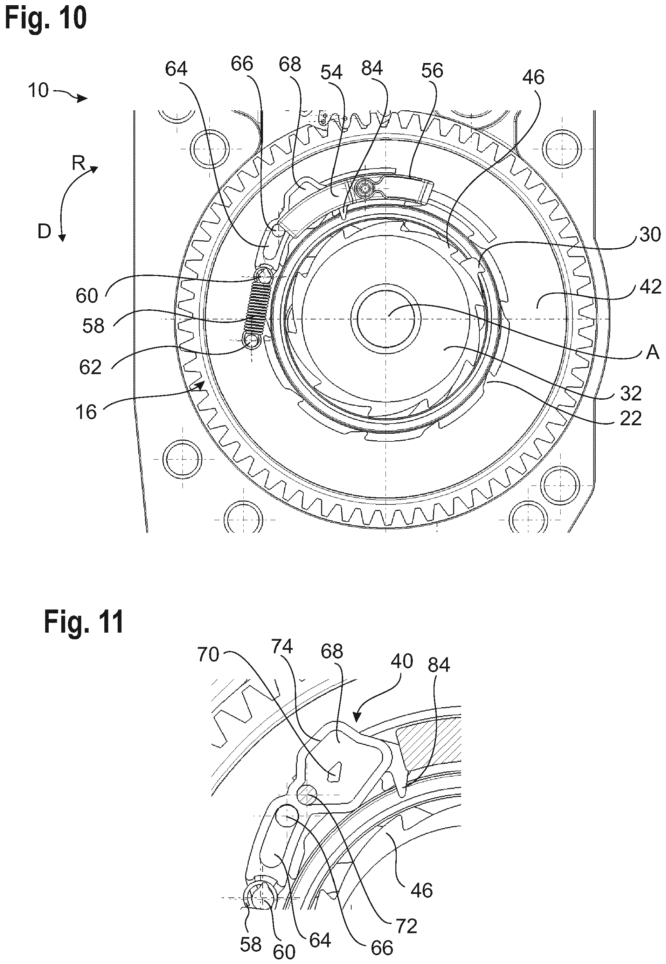

In the open state of the clutch 10, the first pawl 26 is in its disengaged position. This is shown for instance in Figures 9 and 10. The guiding pin 82 lies completely in the parking section 80 of the groove 76 of the interactive guiding geometries 34, 36.

Along that radial direction r, the parking section 80 has about the width of the guiding pin 82. Therefore, the first pawl 26 has no freedom of movement in radial direction r and cannot pivot radially outwards or radially inwards as long as the guiding pin 82 stays stationary.

The center of gravity of the first pawl 26 may be chosen to lay exactly on the common axis of rotation A. In this case, no centrifugal forces will act on the first pawl 26 when the seat belt spool 14 is rotated in either direction. Therefore, the first pawl 26 will stay in its relative position with regard to the seat belt spool 14.

However, it is also possible to choose the shape of the first pawl 26 so that its center of gravity lies outside the axis of rotation A. Then, on rotation of the seat belt spool 14 or also on occurrence of linear accelerations, for instance due to vehicle vibrations or shock situations, a radially outwardly directed centrifugal force will act on the first pawl 26.

As the guiding pin 82 is fixedly mounted to the control disk 32, it will only move relative to the seat belt spool 14 when the control disk 32 rotates relative to the seat belt spool 14. To avoid an unintended relative rotation of these two components, several features are provided in the clutch 10.

Due to the exclusively circumferential extension of the parking section 80 of the groove 76 in the first pawl 26, any centrifugal force acting on the first pawl 26 is translated in an exclusively radial force acting on the guiding pin 82. Therefore, no force component in circumferential direction U will be transferred to the control disk 32 and no unintended relative rotation between the control disk 32 and the seat belt spool 14 will result when the seat belt spool 14 rotates or linear accelerations are transferred from the vehicle to the seat belt retractor.

Further, in this example the control disk 32 is mounted on the seat belt spool 14 by bearing 83 that is elastically deformable when a predetermined force threshold is surpassed. Due to the deformation of the bearing 83, a frictional force between the control disk 32 and the seat belt spool 14 is increased so that a relative rotation between the control disk 32 and the seat belt spool 14 is impeded.

The force threshold preferably is chosen slightly above the force necessary for pivoting the first pawl 26 between its disengaged and its engaged position, e.g. 10 - 30% higher.

The bearing 83 of the control disk 32 is only deformed in case of forces acting on the first pawl 26, for instance during the regular function of the seat belt retractor when the seat belt spool 14 rotates to give out and take in seat belt webbing, or in case of high vehicle accelerations or an activation of the pyrotechnic drive 50 of the seat belt tensioner. During the regular closing and opening operations of the clutch 10 effected by the reversible drive 12, the bearing 83 is not deformed and the rotation of the control disk 32 relative to the seat belt spool 14 is not impeded by frictional forces.

Additionally, an unintended relative rotation of the control disk 32 is hindered by the first tension spring 38 that provided a force in direction towards the initial position of the control disk 32 (see Figure 9) and that acts against any unintended relative rotation between the control disk 32 and the seat belt spool 14.

Therefore, the first pawl 26 is self-locking and an unintended closing of the clutch 10 is avoided.

In the open state of the clutch 10, the second pawl 40 is also in its disengaged position (see for instance Figures 10 and 11) where it does not engage the control disk toothing 46 of the control disk 32.

The reversible drive 12 stands still and is not turning in any direction D, R.

The free end of the coupling pin 72 on the friction element 54 lies in the runway groove 68 at the position I in Figure 4 at the downward end (in the Figures) of the runway groove 68. The second tension spring 58 is mostly relaxed so that the pin 66 in the elongated opening 64 of the second pawl 40 is arranged at the upper end (in the Figures) near the runway groove 68.

The second pawl 40 has a tooth 84 that is in the disengaged position of the second pawl 40 well-distanced from the control disk toothing 46.

To close the clutch 10, the reversible drive 12 is activated and starts to turn the driving gear 16 in driving direction D.

The second pawl 40 starts to rotate together with the driving gear 16. The friction element 54 is still stationary and does not move along the circumferential groove 52. Consequently, the runway groove 68 moves relative to the coupling pin 72 on the friction element 54 so that the coupling pin 72 begins to move along the path P (see Figure 4) in direction of its position marked with II.

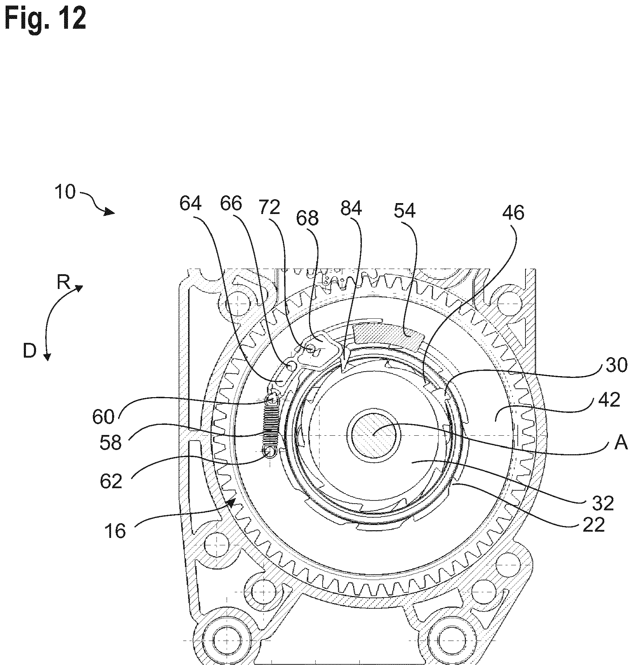

This situation is shown in Figure 12.

The coupling pin 72 comes into contact with the central protrusion 70 at its first flank 70a and its second flank 70b. As the coupling pin 72 is fixedly attached to the friction element 54, the coupling pin, of course, moves always along a circle with a constant diameter. Due to the shape of the runway groove 68, the spatial orientation of the second pawl 40 changes as the coupling pin 72 travels along the path P.

At the start of the closing operation of the clutch 10, the second pawl 40 is swiveled radially inwards until its tooth 84 engages one of the teeth of the control disk toothing 46.

The first pawl 26 still has not yet moved.

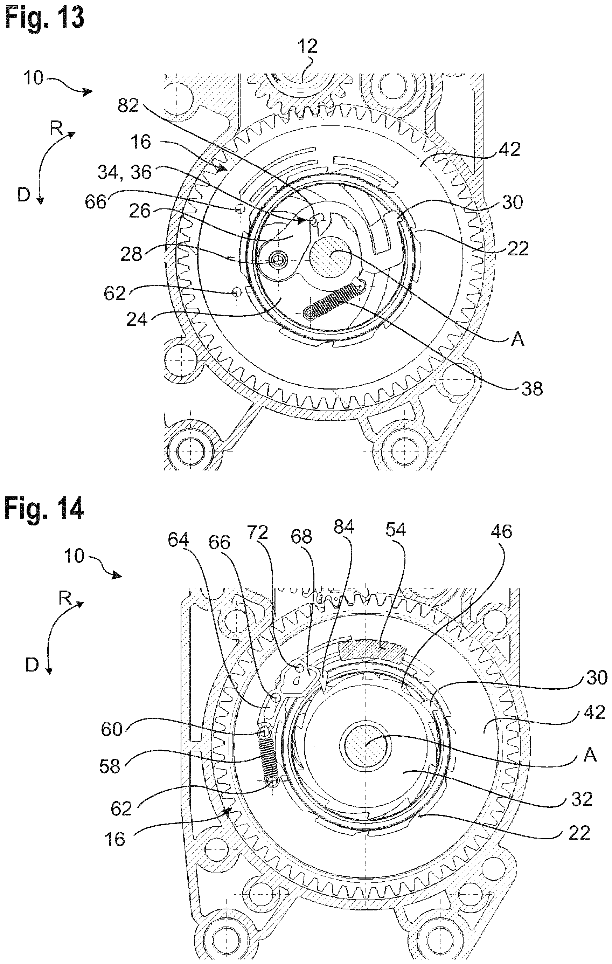

The frictional force between the friction element 54 and the circumferential groove 52 in the housing part 48 is high enough to keep the control disk 32 from rotating together with the seat belt spool 14 so that the control disk 32 falls back with regard to the seat belt spool 14. As a result, also the guiding pin 82 stays back with regard to the first pawl 26. Guiding pin 82 moves out of the parking section 80 of the groove 76 in the first pawl 26 and starts to push the first pawl 26 radially outwards. This position is shown in Figures 13 and 14.

The runway groove 68 swivels relative to the still at least essentially stationary coupling pin 72 until the coupling pin 72 reaches the upper end (in the Figures) of the runway groove 68, marked with III in Figure 4.

As still the control disk 32 is rotating relative to the seat belt spool 14, the guiding pin 82 moves along the guiding section 78 and pivots the first pawl 26 radially further outwards.

The spring constant of the second tension spring 58 is chosen high enough to keep pin 66 of the driving gear 16 at the upper end of the elongated opening 64 of the second pawl 40 near the runway groove 68, while the control disk 32 is rotated relative to the seat belt spool 14.

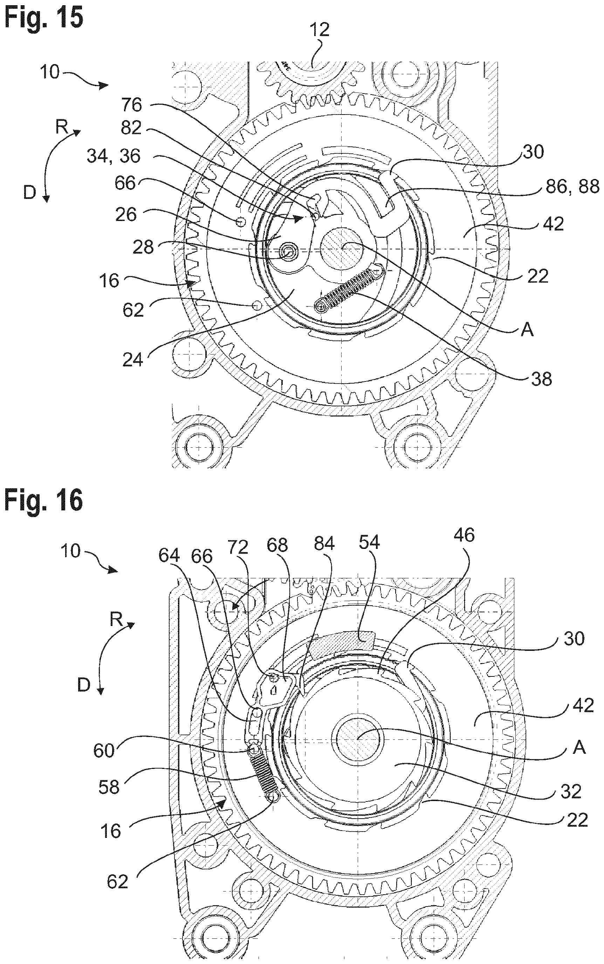

Figures 15 and 16 show this situation.

Now the guiding pin 82 has reached the end of the guiding section 78 of the groove 76 of the first pawl 26.

To avoid all situations where the tooth 30 of the first pawl 26 meets with the tip of a tooth of the clutch-side toothing 22 on the driving gear 16, the rotational motion of the control disk 32 and of the driving gear 16 are synchronized.

In the moment when the second pawl 40 is fully engaged with the control disk toothing 46 and is ready to pull the control disk 32 along, the tooth 30 of the first pawl 26 and the clutch-side toothing 22 of the driving gear 16 are positioned in such a way that the tooth 30 of the first pawl 26 will engage the clutch-side toothing 22 between two adjacent teeth of the clutch-side toothing 22. Therefore, it is impossible that the tooth 30 comes into contact with one of the teeth of the clutch-side toothing 22.

There are several parameters that influence this synchronization. These parameters are for instance: an angular position of the second pawl 40 with regard to the teeth of the clutch-side toothing 22 of the driving gear 16; a number of teeth of the control disk toothing 46 and the clutch-side toothing 22; the shape of the runway groove 68 on the second pawl 40 with regard to length and shape of its inner and outer contour; a pivot path of the first pawl 26 and/or the shape and position of the tooth 30 on the first pawl 26.

In this example both the clutch-side toothing 22 and the control disk toothing 46 have the same number of teeth, in particular ten teeth.

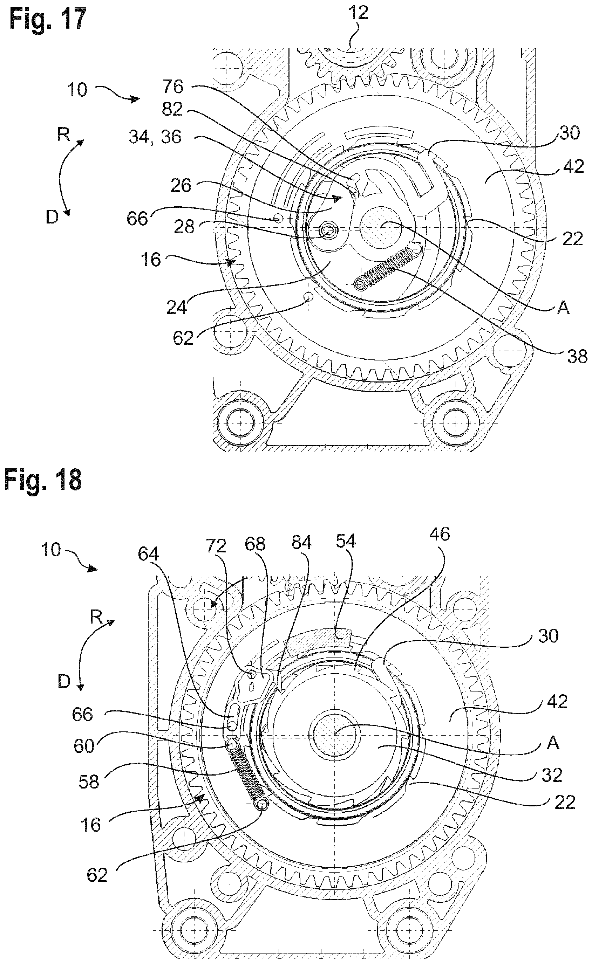

In this example, the synchronization is chosen so that the tooth 30 of first pawl 26 reaches the clutch-side toothing 22 between two adjacent teeth of the clutch-side toothing 22 next to the adjacent tooth in driving direction D. This situation is shown in Figure 17.

In the engaged position of the first pawl 26, an indentation 86 on the first pawl 26 comes into abutment against a pawl stop 88 formed on the face 24 of the seat belt spool 14.

In this situation at the end of the synchronization process the control disk 32 has reached its maximum relative rotation angle β with regard to the seat belt spool 14. The angle β can lie for instance between about 5° and 25°.

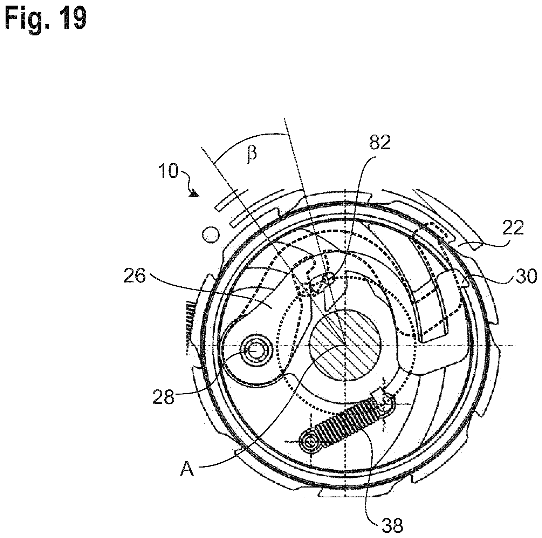

The relative rotation between the control disk 32 and the seat belt spool 14 is indicated in Figure 19 where the disengaged and the engaged position of the first pawl 26 are shown in continuous and broken lines, respectively. Also, the initial position of the control disk 32 and its position after rotating for a maximum rotation angle β are illustrated by the guiding pin 82.

As the guiding pin 82 is fixedly arranged on the face of the control disk 32, it travels always on a circle centered on the common axis of rotation A. The pivoting motion of the first pawl 26 is effected by the interaction of the guiding geometries 34,36.

The friction element 54 together with the flat spring 56 may be pulled along by the second pawl 40 as soon as the coupling pin 72 has reached position III in the runway groove 68 and the control disk 32 has reached its maximum rotation.

When the first pawl 26 has reached its engaged position and the control disk 32 its maximum rotation angle β, the first pawl 26 keeps its position with regard to the seat belt spool. The driving gear 16 continuous to rotate in driving direction D, however, which causes the nearest tooth of the clutch-side toothing 22 to arrive at the tooth 30 of the first pawl 26 so that the first pawl 26 engages the clutch-side toothing 22.

At the same time, the driving gear 16 also rotates with regard to the second pawl 40 (the tooth 84 of the second pawl 40 being engaged with the control disk toothing 46), stretching the second tension spring 58 and translating the pin 66 in the elongated opening 64 of the second pawl 40 until it reaches the lower end of the elongated opening 64 (with regard to the Figures).This situation is depicted in Figures 17 and 18.

As soon as the tooth of the clutch-side toothing 22 of the driving gear 16 contacts the tooth 30 of the first pawl 26, the first pawl 26 is pulled into complete engagement with the driving gear 16. From this moment on, force is transmitted from the reversible drive 12 to the seat belt spool 14, and the seat belt spool 14 is rotated with the same velocity as the driving gear 16 in driving direction D. The driving gear 16 now acts on the seat belt spool 14 and pulls in seat belt webbing to pretention the seat belt of the safety system. Force is transmitted in this situation also by the contact of the indentation 86 and the pawl stop 88.

As load is transferred from the first pawl 26 to the seat belt spool 14 at the pivot axis 28 and at the pawl stop 88 which are arranged in this example on opposite sides of the common rotation axis A, no one-sided load acts on the bearing of the seat belt spool 14 so that torque transmission is maximized with minimum frictional losses.

Now, the second pawl 40 will be decoupled from the control disk toothing 46 by a pawl disengagement mechanism. The pawl disengagement mechanism is designed so that the tooth 84 of the second pawl 40 looses contact with the tooth of the control disk toothing 46 it has engaged and is moved into a decoupled position from which it cannot engage again with the control disk toothing 46 as long as the driving gear 16 continuous to rotate in driving direction D.

The pawl release mechanism 90 can include the tooth 84 of the second pawl 40 and of the teeth of the control disk toothing 46 that may be adapted so that upon reaching a predetermined torque or force threshold the tooth 84 of the second pawl 40 slips out of engagement. The runway groove 68 and the elongated opening 64 are also part of the pawl release mechanism 90 in this example, as well as the coupling pin and the friction element 54. The shape of the runway groove 68 and the position of the elongated opening 64 can be adapted correspondingly to generate the desired decoupling behavior.

It is possible that components are part of both the pawl engagement mechanism 44 and the pawl release mechanism 90.

Additionally or in the alternative the tooth 84 of the second pawl 40 and/or the teeth of the control disk toothing 46 can be designed elastically deformable so that the tooth 84 slips from the control disk toothing 46 upon surpassing a predetermined force threshold. In this case the tooth 84 and the control disk toothing 46 can also be considered a part of the pawl release mechanism 90.

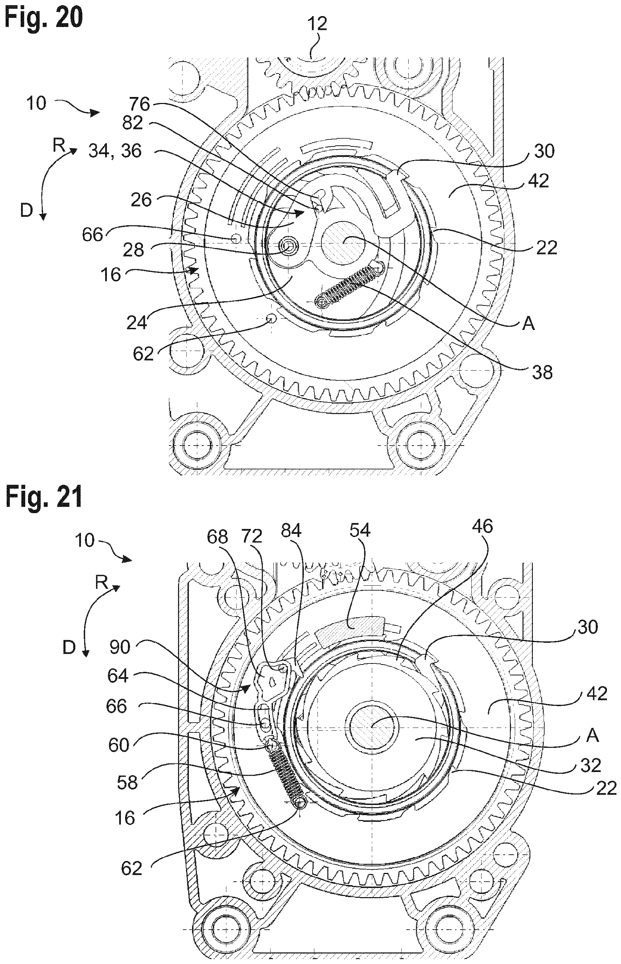

This situation is shown in Figures 20 and 21.

When the tooth 84 looses contact with the control disk toothing 46, the coupling pin 72 moves further along its path P in the runway groove 68 into the position denoted IV in Figure 4. The second pawl 40 is swiveled radially outwards so that the tooth 84 of the second pawl 40 now lies radially outwards of the control disk toothing 46 and cannot reengage with the control disk toothing 46.

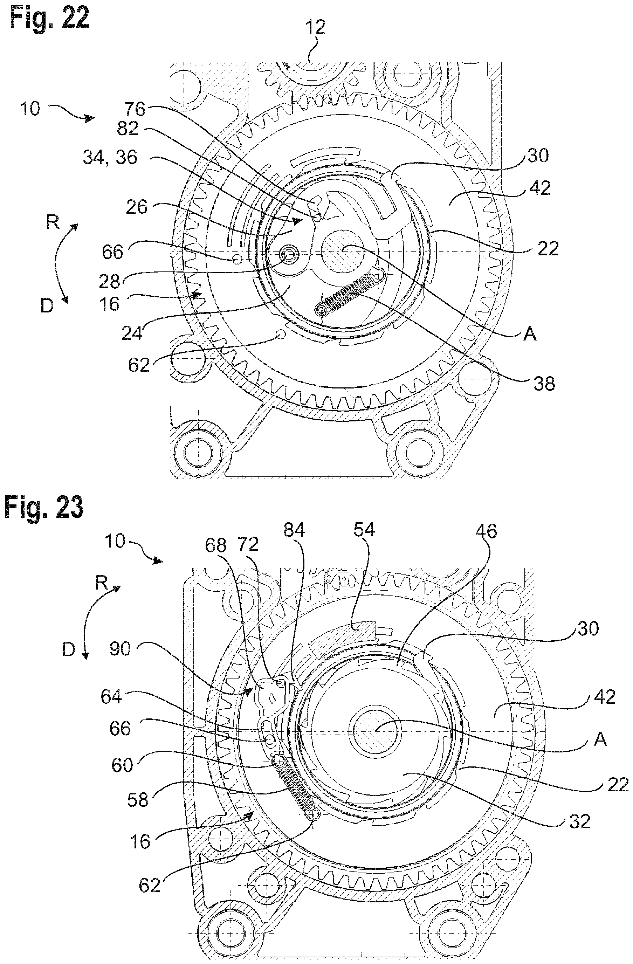

The second pawl 40 may be decoupled as soon as load is transferred from the driving gear 16 to the tooth 30 of the first pawl 26, even before the first pawl 26 is in complete engagement with the driving gear 16 (see Figures 21 and 23).

As the second pawl 40 is still coupled by the coupling pin 72 on the friction element 54, the friction element 54 is pulled along together with the flat spring 56 in the circumferential groove 52 of the housing part 48. This constant frictional force also serves to keep the runway groove 68 oriented. At its end facing away from the runway groove 68, the second pawl 40 is kept in position by the pretension of the second tension spring 58. Therefore, the orientation of the second pawl 40 and in particular the runway groove 68 is reproducible in every decoupling process.

The first tension spring 38 exerts a force of the control disk 32 acting in direction of the initial position of the control disk 32, however, the force exerted by the driving gear 16 on the first pawl 26 is far higher so that the control disk 32 stays at its maximum rotation angle β with regard to the seat belt spool 14.

Should the pyrotechnic drive 50 be activated at this stage of clutch 10 while the first pawl 26 is engaged with the driving gear 16 and the driving gear 16 is rotating in driving direction D and while the second pawl 40 is already decoupled from the control disk 32, the seat belt spool 14 is rotated in driving direction D with a higher velocity than the still turning driving gear 16 is rotated by the reversible drive 12. As a result, the tooth 30 of the first pawl 26 is rotated away from the tooth of the clutch-side toothing 22 of the driving gear 16 it was engaged with and looses contact with the clutch-side toothing 22. As the counterforce to the pretensioning force of the first tension spring 38 ceases, the first tension spring 38 pulls the control disk 32 back into its initial position, thereby swiveling the first pawl 26 back into its disengaged position by the interaction of the guiding geometries 34, 36. At the end of this motion, the guiding pin 82 again lies in the parking section 80 of the groove 76.

The driving gear 16 may continue to turn in driving direction D without hindering the rotation of the seat belt spool 14 by the pyrotechnic drive 50.

The second pawl 40 stays in its decoupled position.

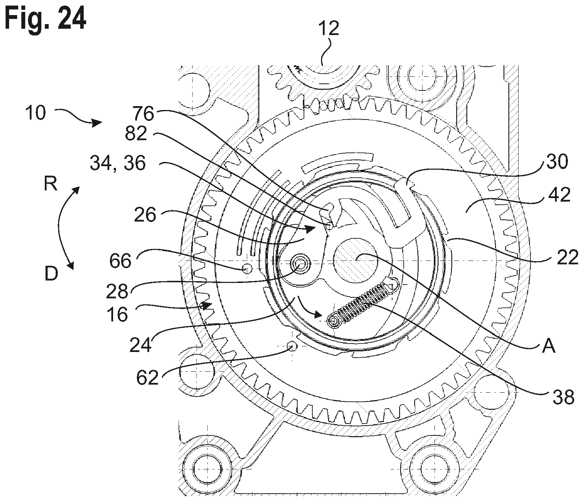

This situation is depicted in Figure 24.

If the pyrotechnic drive 50 is not activated, the clutch 10 can be disengaged by rotating the reversible drive 12 and the driving gear 16 in releasing direction R.

As the tooth of the clutch-side toothing 22 on the driving gear 16 starts to rotate away from the tooth 30 of the first pawl 26 it was engaged with, the first pawl 26 looses contact with the driving gear 16. Consequently, the control disk 32 is rotated back into its initial position by the first tension spring 38. Due to the interaction of the guiding geometries 34, 36, the first pawl 26 is pivoted back from its engaged position into its disengaged position. The guiding pin 82 travels back through the guiding section 78 of the groove 76 on the first pawl 26 all the way to the end of the parking section 80.

The second tension spring 58 also relaxes and the elongated opening 64 slides back along the pin 66 slides until the pin 66 reaches the upper end (in the Figures) of the elongated opening 64. Now, the driving gear 16 pushes the second pawl 40 in releasing direction R.

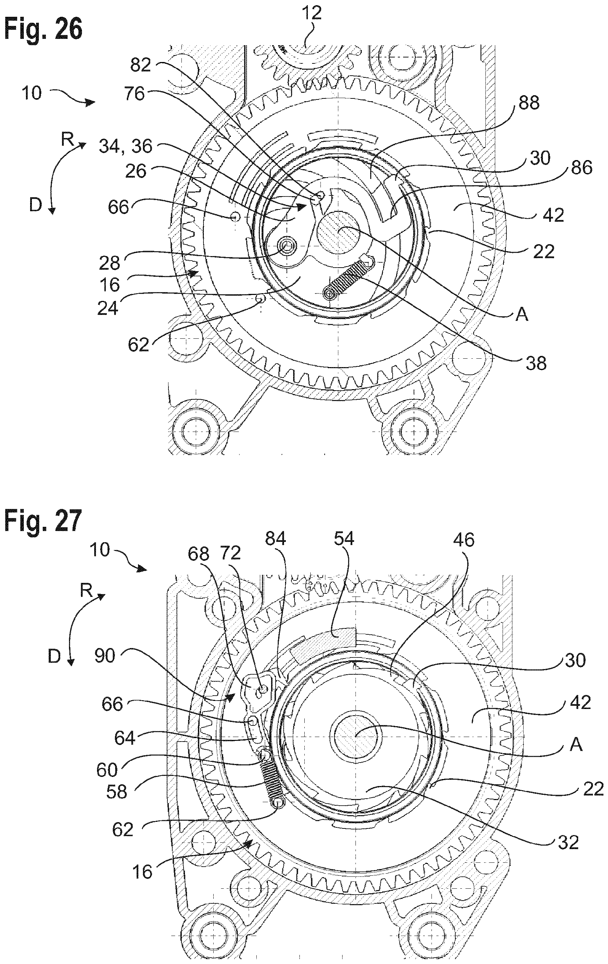

At this moment, the driving forces acting on the friction element 54 are not high enough to move the friction element 54 against the resistance of the flat spring 56 along the circumferential groove 52. Therefore, the second pawl 40 is moved relative to the coupling pin 72, and the coupling pin 72 continuous to travel along the path P in the runway groove 68 and reaches position V in Figure 4. This is shown in Figures 26 and 27.

As the driving gear 16 continues to rotate in releasing direction R, the second pawl 40 is pushed further radially outwards than it its disengaged position while the coupling pin 72 travels along the runway groove 68.

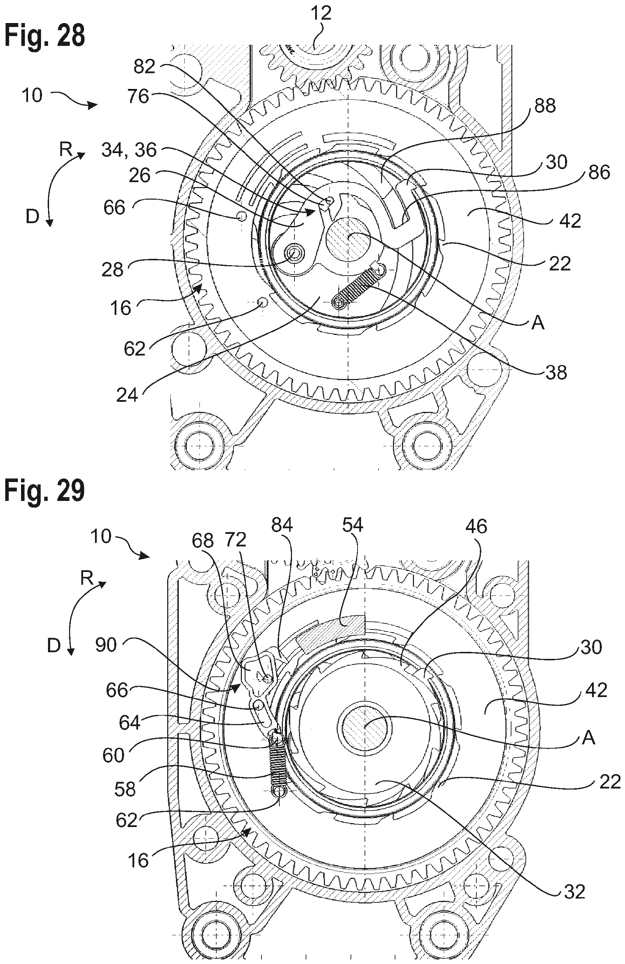

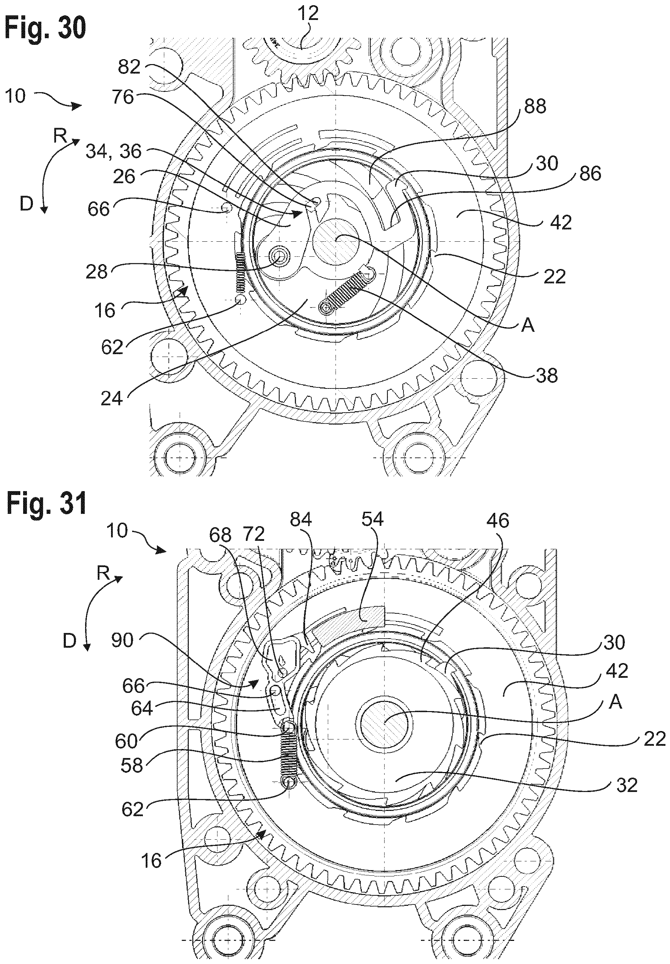

Finally, as the coupling pin 72 is pushed through the runway groove 68 along the path P, it reaches the position VI in Figure 4 and, again, the position I. Then, the second pawl 40 has reached its disengaged position again. This is shown in Figures 28 to 31.

The clutch 10 is now ready for a renewed engagement by rotating the driving gear 16 in driving direction D.

The position of the coupling pin 72 in the runway groove 68 and the shape of the runway groove 68 are chosen so that further rotation of the driving gear 16 in releasing direction R will not lead to any motion of the coupling pin 72 in the runway groove 68 (see also Figures 4 and 11), and the coupling pin 72 stays in its position I as long as the driving gear 16 rotates in releasing direction R.

## Claims

1. A clutch (10) for a seat-belt tensioner in a vehicle, comprising
a driving gear (16) adapted for being rotated in a driving direction (D) and in a releasing direction (R),
a first pawl (26) arranged at a face side (24) of a seat belt spool (14), the first pawl (26) having a tooth (30) adapted to engage with a clutch-side toothing (22) on the driving gear (16) to couple the seat belt spool (14) with the driving gear (16), the first pawl (26) being held pivotally around a pivot axis (28) on the seat belt spool (14) and being adapted to assume a disengaged position in which the first pawl (26) is not in engagement with the clutch-side toothing (22) of the driving gear (16) and an engaged position in which the first pawl (26) is in engagement with the clutch-side toothing (22) and
a second pawl (40) arranged at a face side (42) of the driving gear (16), the second pawl (40) being adapted to interact with a control disk (32) mounted on the seat belt spool (14), the control disk (32) being rotatable about a predetermined rotation angle (β) with respect to the seat belt spool (14),
the control disk (32) being adapted to interact with the first pawl (26) by way of guiding geometries (34, 36) on the first pawl (26) and the control disk (32) so that the first pawl (26) is moved from the disengaged position into the engaged position,
the guiding geometries (34, 36) including an axially extending guiding pin (82) that is arranged in a groove (76), the groove (76) having a parking section (80) extending in circumferential direction (U), the guiding pin (82) lying in the parking section (80) when the first pawl (26) is in the disengaged position so that the first pawl (26) is hindered from pivoting away from its disengaged position.

2. The clutch according to claim 1, **characterized in that** a width of the parking section (80) in radial direction (r) corresponds to a cross-section of the guiding pin (82).

3. The clutch according to any of the preceding claims, **characterized in that** the control disk (32) is mounted to the seat belt spool (14) in a bearing (xy) that is deformable in radial direction (r) when a predetermined force threshold is surpassed so that a predetermined frictional force acting on the control disk (32) is increased and the control disk (32) is kept stationary with regard to the seat belt spool (14).

4. The clutch according to any of the preceding claims, **characterized in that** the first pawl (26) is shaped so that the center of gravity of the first pawl (26) is arranged outside the axis of rotation (A) of the seat belt spool (14).

5. The clutch according to any of claims 1 to 3, **characterized in that** the first pawl (26) is shaped so that the center of gravity of the first pawl (26) is arranged exactly at the axis of rotation (A) of the seat belt spool (14).

6. The clutch according to any of the preceding claims, **characterized in that** the control disk (32) is connected to the seat belt spool (14) by a first tension spring (38) that generates an increasing pretension with increasing relative rotation of the control disk (32) with respect tot the seat belt spool (14).

7. The clutch according to any of the preceding claims, **characterized in that** the clutch-side toothing (22) is arranged at a radial inner face of a central opening (20) in the driving gear (16).

8. The clutch according to any of the preceding claims, **characterized in that** the first pawl (26) is pivoted radially outwards from the disengaged position into the engaged position.

9. The clutch according to any of the preceding claims, **characterized in that** the control disk (32) has a control disk toothing (46) and the second pawl (40) has a tooth (xz) and is pivotally arranged on the driving gear (16) so that the tooth (xz) is able to engage the control disk toothing (46).
